(19) Europäisches Patentamt / European Patent Office / Office européen des brevets

(11) **EP 2 278 286 A1**

(12) **EUROPÄISCHE PATENTANMELDUNG**

(43) Veröffentlichungstag:
26.01.2011 Patentblatt 2011/04

(51) Int Cl.:
*G01G 23/01* (2006.01)    *G01G 23/48* (2006.01)

(21) Anmeldenummer: 09166243.7

(22) Anmeldetag: 23.07.2009

(84) Benannte Vertragsstaaten:
AT BE BG CH CY CZ DE DK EE ES FI FR GB GR HR HU IE IS IT LI LT LU LV MC MK MT NL NO PL PT RO SE SI SK SM TR

(71) Anmelder: Mettler-Toledo AG
8606 Greifensee (CH)

(72) Erfinder:
• Reber, Daniel
  8322, Madetswil (CH)
• Köppel, Thomas
  8618, Oetwil am See (CH)

(54) **Verfahren zur Ermittlung von Prozessgrössen für eine Kraftmessvorrichtung und Kraftmessvorrichtung**

(57) Das Verfahren dient der Ermittlung von Prozessgrössen in einer Kraftmessvorrichtung (1), insbesondere einer Waage, die eine Systemsteuerung (SM10) aufweist, welche anhand eines Messprozesses (MP) ein zu einer einwirkenden Kraft (Win) korrespondierendes elektrisches Kraftmesssignal (Wout) bildet; wobei in den Messprozess (MP) eingegriffen wird, um störende Einflüsse zu kompensieren. Erfindungsgemäss wird der Messprozess (MP) durch einen Bildprozess (BP) zumindest teilweise abgebildet, der wenigstens ein Bildmodul (BM1, BM2, ..., BMn) aufweist, durch das ein physikalischer Teilprozess des Messprozesses (MP) abgebildet und der Zusammenhang zwischen wenigstens einer physikalischen Eingangsgrösse und wenigstens einer physikalischen Ausgangsgrösse erstellt wird. Dem Bildprozess (BP) wird wenigstens eine Prozessgrösse, wie eine Eingangsgrösse, eine Zwischengrösse und/oder eine Ausgangsgrösse, des Messprozesses zugeführt, zu der das wenigstens eine Bildmodul (BM1, BM2, ..., BMn) eine dazu korrespondierende physikalische Referenzgrösse (P, TM, TH, T1, T2) bildet, welche als Prozessgrösse in den Messprozess (MP) eingeführt oder mittels der eine Prozessgrösse (TM, Wout) des Messprozesses (MP) korrigiert wird.

FIG. 2

EP 2 278 286 A1

## Beschreibung

Die vorliegende Erfindung betrifft ein Verfahren zur Ermittlung von Prozessgrössen in einer Kraftmessvorrichtung, insbesondere einer Waage, und eine entsprechende Kraftmessvorrichtung.

Im Allgemeinen umfasst eine Kraftmessvorrichtung verschiedene Komponenten wie eine Kraftaufnahme, eine Kraftübertragung, eine Kraftmesszelle und gegebenenfalls eine Vorrichtung zur Verarbeitung von Messsignalen. Eine zu messende Kraft wird mittels der Kraftaufnahme aufgenommen und über die Kraftübertragung zumindest anteilweise an die Kraftmesszelle weitergeleitet. Die Kraftmesszelle formt die zugeführte Kraft in ein elektrisches Kraftmesssignal um, welches zur der auf die Kraftmessvorrichtung einwirkenden Kraft korrespondiert. Dieses Kraftmesssignal steht als Prozessgrösse am Ausgang des gesamten Messprozesses zur Verfügung.

In entsprechender Weise ergibt sich bei einer Waage als weitere Prozessgrösse die einwirkende Kraft durch die Gewichtskraft des Wägeguts, die sogenannte Last, welche auf die Kraftaufnahme, z.B. eine Waagschale wirkt. Diese Kraftwirkung wird über die Kraftübertragung in Form eines Gestänges auf die Kraftmesszelle oder Wägezelle weitergeleitet und dort in ein elektrisches Kraftmesssignal, das sogenannte Wägesignal, umgewandelt.

Elektronische Waagen basieren üblicherweise auf der DMS-Technologie oder dem Prinzip der elektromagnetischen Kraftkompensation. Beide Technologien und deren Vorteile sind z.B. in "Bauen Sie Ihre Qualität auf solidem Grund!", Firmenbroschüre, Mettler Toldeo GmbH, Januar 2001, Seiten 14 - 15, beschrieben. Weitere Waagen basieren auf dem Prinzip der Saitentechnologie.

Bei der DMS-Technologie werden Wägezellen mit einem elastischen Verformungskörper verwendet, auf dem elektrische Widerstandsfolien (Dehnungsmessstreifen DMS) aufgebracht sind, die Dehnungsmessstreifen ändern bei einer Verformung ihren Widerstandswert, der als Mass für die auf den Verformungskörper einwirkende Last verwendet wird. Durch geeignete Konstruktion wird sichergestellt, dass diese Widerstandsänderung proportional zur einwirkenden Verformungskraft verläuft.

Bei Waagen mit elektromagnetischer Kraftkompensation wird im Luftspalt eines Permanentmagnetsystems eine bewegliche Kompensationsspule von einem lastabhängigen Messstrom durchflossen und dadurch auf konstanter Höhe gehalten. Der Kompensationsstrom oder Messstrom wird als Mass für die auf die Kompensationsspule einwirkende Last verwendet.

Das elektrische Kraftmesssignal wird an eine Signalverarbeitungseinheit weitergeleitet, welche der weiteren Verarbeitung des Kraftmesssignals und der Erzeugung eines entsprechenden Ausgangssignals dient. Das Ausgangssignal wird an eine Anzeigeeinheit und/oder an eine weitere Verarbeitungsvorrichtung, z.B. an einen Leitrechner oder an eine Anlagensteuerung, übertragen.

Der Einsatz von Kraftmessvorrichtungen ist vielfältig. In Labors werden Waagen zur Gewichtsbestimmung einzelner Gegenstände und Substanzen verwendet. Im industriellen Einsatz mit automatisierten Produktions- und Testanlagen werden grössere Mengen von Wägegütern typischerweise sequenziell gemessen. Die Anforderungen an solche Kraftmessvorrichtung bestehen in einer hohen Messgenauigkeit, einer hohen Reproduzierbarkeit und Stabilität der durchgeführten Messungen. Ausserdem soll die Kraftmessvorrichtung möglichst einfach, kostengünstig und vorzugsweise wartungsfrei aufgebaut sein.

Störgrössen, welche die Messungen beeinflussen, sind in der Wägefibel, Mettler Toldeo GmbH, April 2001 beschrieben. Dabei treten externe und interne Störgrössen auf, die auf den Messprozess einwirken.

Zu beachten sind der Luftdruck, die Luftfeuchtigkeit, Luftbewegungen, die Umgebungstemperatur oder die Einwirkung von Strahlung, beispielsweise Wärmestrahlung, die vom Anwender oder von weiteren Strahlungsquellen herrührt, wie der Beleuchtung oder der Raumheizung. Durch unterschiedliche Pfade der Wärmeverteilung entstehen dynamisch Abweichungen im Messresultat. Dabei können Raumtemperaturänderungen dynamisch kompensiert werden. Die Einwirkung von Strahlung wird vorzugsweise durch eine entsprechende Ausgestaltung des Gehäuses der Waage neutralisiert.

Bei den internen Einflüssen sind insbesondere Wärmeeinwirkungen auf die Messzelle zu beachten, die von verschiedenen Quellen, wie der Stromversorgung und der Messelektronik, herrühren können. Bei Waagen mit elektromagnetischer Kraftkompensation tritt als wesentliche Wärmequelle die vom Messstrom durchflossene Kompensationsspule hinzu. Durch unterschiedliche Lasten und deren Kompensation ändern sich der Messstrom, die zugeführte Leistung und somit die Erwärmung der Spule entsprechend. Die von der Kompensationsspule abgegebene Wärmeenergie beeinflusst insbesondere das Magnetsystem, die Mechanik und die Temperaturmessung. Durch die Temperaturänderung des Permanentmagneten ändert sich die Feldstärke, weshalb bei gleicher Last der Messstrom angepasst werden muss. Die Änderung der Feldstärke ist dabei abhängig vom Temperaturkoeffizienten des Magneten. Bekanntlich weisen Ferritmagnete einen höheren Temperaturkoeffizient auf als Neodym-Eisen-Bor-Magnete. Die tiefsten Temperaturkoeffizienten weisen Samarium-Kobalt-Magnete auf.

Um Messfehler zu vermeiden, sind die störenden Einflüsse und deren Auswirkungen in der Kraftmessvorrichtung zu kompensieren.

Aus der GB 1495278, ist ein Korrekturverfahren bekannt, bei dem verschiedene Einflussgrössen, wie die Aussentemperatur oder der Luftdruck, gemessen und in einem Korrekturprozessor mit gespeicherten Parameterwerten verknüpft werden, um einen Korrekturwert zu bilden, der mit dem digitalisierten Gewichtssignal summiert wird. Wesentlich ist bei dieser Korrekturmethode, dass die Einflussgrössen präzise erfasst werden.

In der DE29707659U1, ist beschrieben, dass durch geschickte Positionierung der Temperatur-Messfühler die Einflussgrössen präziser erfasst werden können. Allerdings ist die Positionierung eines Temperatur-Messfühlers an einer gewünschten Stelle oft nicht möglich. Ferner ist es denkbar, dass an mehreren Positionen relevante Temperaturänderungen auftreten können. Zudem ist zu beachten, dass die Auswirkungen von Wärmeeinwirkungen anhand der Temperatur-Messfühler erst spät erfasst werden können. Die Temperaturfühler sind an der Oberfläche von Vorrichtungsteilen befestigt, weshalb Temperaturänderungen nur oberflächlich und punktuell festgestellt werden können. Sofern der tatsächliche Zustand der Vorrichtung genauer erfasst werden sollte, wäre ein hoher Messaufwand erforderlich.

Gemäss der DE29803425U1, ist es üblich, zur Temperaturkompensation einer Waage, am Ende der Waagenfertigung das Ausgangssignal des Messwertaufnehmers bei zwei verschiedenen Belastungen der Waage und bei zwei verschiedenen Temperaturen in einem Klimaraum zu messen. Daraus wird mittels an die Waage angeschlossener Rechner der Temperaturkoeffizient des Nullpunktes und der Empfindlichkeit berechnet. Die berechneten Temperaturkoeffizienten werden innerhalb der digitalen Signalverarbeitungseinheit abgespeichert und anschliessend für die rechnerische Temperaturkompensation innerhalb der digitalen Signalverarbeitungseinheit benutzt. Gemäss der genannten Schrift ist bei diesem üblichen Verfahren zur Temperaturkompensation jedoch ein Klimaraum erforderlich, so dass eine Temperaturkompensation nur im Rahmen der Waagenfertigung problemlos durchgeführt werden kann. Schon eine Temperaturkompensation im Rahmen eines Services ist hingegen schwierig zu bewerkstelligen. Aufgrund dieser Nachteile wurde daher vorgeschlagen, den zeitlichen Verlauf des Ausgangssignals des Temperaturfühlers zu analysieren und die Änderungsgeschwindigkeit der Temperatur zu bestimmen und bei hinreichend kleiner Änderungsgeschwindigkeit das momentane Ausgangssignal des Temperaturfühlers und das momentane Nullsignal NP des Messwertaufnehmers als Wertepaar abzuspeichern. Aus mehreren, zeitlich mindestens um eine vorgegebene Zeitdifferenz auseinander liegenden Wertepaaren wird durch Lösung mathematischer Gleichungssysteme der Temperaturkoeffizient des Nullpunktes berechnet und damit das Ausgangssignal des Messwertaufnehmers korrigiert.

Auch dieses Verfahren ist mit erheblichen Nachteilen belastet. Einerseits ist nämlich wiederum die präzise Erfassung von Messwerten für das korrekte Ergebnis der mathematischen Operationen relevant. Andererseits lässt sich durch wenige Eingangsgrösse das Verhalten der Waage nicht genügend genau beschreiben. Sofern hingegen Eingangsgrössen unterschiedlicher Art in höherer Anzahl hinzugezogen werden, resultieren ausserordentlich komplexe mathematische Systeme. Nachteilig ist weiterhin, dass ein mathematisches System, das für eine bestimmte Vorrichtung erstellt wurde, nicht leicht auf weitere Vorrichtungen übertragbar ist. Ferner treten bei solchen Systemen typischerweise Unzulänglichkeiten auf, welche einer optimalen Korrektur der ermittelten Werte entgegenwirken.

Ferner führt die Optimierung dieser mathematischen Systeme stets zu noch komplexeren Systemen, die kaum beherrschbar sind. Falls z.B. eine weitere Eingangsgrösse berücksichtigt werden soll, ist unter Umständen das gesamte mathematische System zu überarbeiten.

Der vorliegenden Erfindung liegt daher die Aufgabe zugrunde, ein verbessertes Verfahren zur Ermittlung von Messwerten in einer Kraftmessvorrichtung, insbesondere einer Waage, sowie eine verbesserte Kraftmessvorrichtung, insbesondere eine Waage, anzugeben.

Das Verfahren soll zu einer signifikanten Verbesserung der Messgenauigkeit der Kraftmessvorrichtung beitragen und einfach realisierbar sein. Ferner sollen das Verfahren und darauf basierende Computerprogramme mit minimalem Aufwand gezielt erweiterbar sein. D.h., aufgedeckte Schwachstellen sollen isoliert verbessert werden können, ohne dass das gesamte System überarbeitet wird.

Weiterhin sollen das für eine Kraftmessvorrichtung erarbeitete Verfahren und dafür er stellte Computerprogramme mit einfachen Massnahmen auf unterschiedliche Kraftmessvorrichtungen übertragbar sein, die auf gleicher oder unterschiedlicher Technologie basieren.

Zudem soll die Erfassung von Eingangsgrössen vereinfacht und eine aufwendige Montage von zahlreichen Messfühlern vermieden werden. Anhand des Verfahrens sollen zudem unterschiedliche interne und externe Einflussgrössen kompensierbar sein.

Diese Aufgabe wird mit einem Verfahren und mit einer Kraftmessvorrichtung gelöst, welche die in den unabhängigen Ansprüchen angegebenen Merkmale aufweisen. Vorteilhafte Ausgestaltungen der Erfindung sind in den weiteren, abhängigen Ansprüchen angegeben.

Das Verfahren dient der Ermittlung von Prozessgrössen in einer Kraftmessvorrichtung, insbesondere einer Waage, die eine Systemsteuerung aufweist, welche anhand eines Messprozesses ein zu einer einwirkenden Kraft korrespondierendes elektrisches Kraftmesssignal bildet; wobei in den Messprozess eingegriffen wird, um störende Einflüsse zu kompensieren.

Erfindungsgemäss wird der Messprozess durch einen Bildprozess zumindest teilweise abgebildet, der wenigstens ein Bildmodul aufweist, durch das ein physikalischer Teilprozess des Messprozesses abgebildet und der Zusammenhang zwischen Prozessgrössen, nämlich wenigstens einer physikalischen Eingangsgrösse und wenigstens einer physikalischen Ausgangsgrösse erstellt wird. Dem Bildprozess wird wenigstens eine Prozessgrösse, wie eine Eingangsgrösse, eine Zwischengrösse und/oder eine Ausgangsgrösse, des Messprozesses zugeführt, zu der das Bildmodul eine dazu korrespondierende physikalische Referenzgrösse bildet, welche als Prozessgrösse in den Messprozess eingeführt oder mittels der eine Prozessgrösse des Messprozesses korrigiert wird.

Durch das physikalische Abbild des Messprozesses in einem Bildprozess können einzelne Grössen des Messprozesses, die anhand von Messfühlern nur ungenau oder mit grossem Aufwand erfasst werden können, präzise ermittelt werden. Das erfindungsgemässe Verfahren erlaubt daher die präzise Ermittlung von Prozessgrössen, die mit konventionellen Verfahren gegebenenfalls gar nicht zugänglich sind.

Dazu werden in dem wenigstens einen Bildmodul die physikalischen Zusammenhänge zwischen den Eingangsgrösse und den Ausgangsgrössen festgelegt, wonach durch Erfassung einer Eingangsgrösse oder einer Ausgangsgrösse, eine damit zusammenhängende Referenzgrösse bestimmbar ist. Sofern dem Bildmodul die Eingangsgrösse zugeführt wird, dient eine entsprechende Ausgangsgrösse des Bildmoduls als Referenzgrösse. Sofern dem Bildmodul hingegen eine Ausgangsgrösse zugeführt wird, so dient eine entsprechende Eingangsgrösse als Referenzgrösse.

Die Referenzgrösse kann dabei an beliebiger Stelle in den Messprozess eingeführt und dort mit weiteren Prozessgrössen verknüpft werden. Z.B. kann der Bildprozess die Temperatur eines Teils der Kraftmessvorrichtung bestimmen, welche in den Messprozess überführt und dort für weitere Prozessschritte zur Verfügung steht. Der Bildprozess kann ferner das Kraftmesssignal ermitteln, welches als Ausgangssignal des Messprozesses zur Verfügung gestellt und z.B. an einer Anzeige ausgegeben wird. Ferner kann der Bildprozess lediglich ein Korrektursignal liefern, mittels dessen eine Prozessgrösse, z.B. das Kraftmesssignal korrigiert wird.

Sofern festgestellt wird, dass die interessierenden physikalischen Zusammenhänge nicht genügend genau abgebildet sind, so kann die Abbildung mit einfachen Massnahmen durch Berücksichtigung zusätzlicher Prozessgrössen ergänzt werden. Sofern z.B. festgestellt wird, dass ein bisher unberücksichtigter Teil der Kraftmessvorrichtung einen störenden Einfluss auf das Kraftmesssignal ausübt, so kann die Art des Einflusses genauer untersucht und durch Aufnahme wenigstens einer weiteren Eingangsgrösse berücksichtigt werden. Z.B. wird ein einzelnes Bildmodul erweitert oder ein neues Bildmodul eingefügt, welches ein Ausgangssignal bildet, das die Zusammenhänge in der Kraftmessvorrichtung präziser darstellt. Sofern z.B. festgestellt wurde, dass anstelle von zwei relevanten Wärmequellen in der Kraftmessvorrichtung nur eine berücksichtigt wurde, so kann der Einfluss der weiteren Wärmequelle, z.B. der Stromversorgungseinheit, mit relativ einfachen Massnahmen zusätzlich berücksichtigt werden.

Sofern ein Mangel des Korrektursystems festgestellt wird, kann daher gezielt, d.h. dort eingegriffen werden, wo der Mangel festgestellt wurde. Dies erlaubt eine einfache und gezielte Optimierung des Bildprozesses und somit der dadurch ermittelten Prozessgrössen.

Die Zusammenhänge zwischen den physikalischen Grössen in den Bildmodulen sind z.B. anhand gespeicherter physikalischer Kennlinien festgelegt. Z.B. werden die Kennlinien von aktiven Halbleiterelementen oder die Kennlinien des Magnetsystems der Messzelle verwendet. Anhand der Kennlinien des Permanentmagneten kann bei einer bestimmten Temperatur die aktuelle Feldstärke ermittelt werden, die für die weiteren physikalischen Berechnungen benötigt wird. Die weiteren Zusammenhänge zwischen physikalischen Grössen werden entsprechend den relevanten physikalischen Gesetzmässigkeiten festgelegt.

Falls eine Grösse im Messprozess von mehreren Teilgrössen abhängt, werden vorzugsweise alle Teilgrössen berücksichtigt, welche die physikalischen Vorgänge innerhalb des Messprozesses beeinflussen.

Durch ein Bildmodul, dem eine oder mehrere Eingangsgrössen zugeführt werden, können eine oder mehrere Ausgangsgrössen ermittelt werden. Z.B. werden die Temperatur eines mechanischen Hebels und gleichzeitig dessen von der Temperatur abhängige Länge als Ausgangsgrössen ermittelt. Die Temperatur des Hebels, die z.B. zusätzlich einen am Hebel befestigten Messfühler beeinflusst, wird vorzugsweise in einem weiteren Bildmodul berücksichtigt. Die Länge des Hebels, die für die Ermittlung eines Übersetzungsverhältnisses und zur Bestimmung einer davon abhängigen Kraft relevant ist, wird hingegen einem anderen Bildmodul als Eingangsgrösse zugeführt.

Anhand des Bildprozesses können daher vorteilhaft auch physikalische Referenzgrössen ermittelt werden, welche im Messprozess messtechnisch nicht erfasst werden können, z.B., weil dies nicht möglich ist, oder weil dies einen zu grossen Aufwand verursachen würde. Z.B. ist es kaum möglich, die Länge des Kompensationshebels in der Kraftmessvorrichtung geometrisch zu vermessen. Anhand des Bildprozesses können die gewünschten Daten jedoch mit geringem Aufwand ermittelt werden. Weiterhin können mittels des Bildprozesses elektrische oder magnetische Grössen bestimmt werden, deren Messung einen hohen Aufwand verursachen würde. Zudem können die Eigenschaften von Messfühlern und Messwandlern berücksichtigt werden, die ebenfalls Temperatureinflüssen unterworfen sind.

Erfindungsgemäss werden lastabhängige und/oder lastunabhängige Prozessgrössen aus dem Messprozess in den Bildprozess transferiert und dort durch das entsprechende Bildmodul zur Bildung einer Referenzgrösse verwendet. Im Gegensatz zu dem in der GB 1495278 beschriebenen Verfahren werden bei der erfindungsgemässen Lösung daher auch lastabhängige Prozessgrössen, wie ein Strom, eine Leistung, eine Kraft oder das ermittelte Gewicht der Last für das Korrekturverfahren berücksichtigt. Dies ist besonders vorteilhaft, wenn die lastabhängige Grösse mit störenden Veränderungen im Messprozess in Zusammenhang steht.

Bei Kraftmessvorrichtungen, die nach dem Prinzip der elektromagnetischen Kraftkompensation arbeiten, wird in Abhängigkeit der Last in der Kompensationsspule eine elektrische Leistung in Wärmeenergie umgewandelt, welche den Messprozess beeinflusst. Die von der Kompensationsspule abgegebene Wärmeenergie ist dabei proportional zum ermittelten Kraftmesssignal, weshalb dieses vorteilhaft für die Ermittlung des Zustandes innerhalb der Kraftmessvorrichtung, insbesondere zur Bestimmung der Erwärmung des Magnetsystems hinzugezogen wird. Dabei sind kleinere Abweichungen des noch unkorrigierten Kraftmesssignals nicht relevant. Ferner kann auch das korrigierte Kraftmesssignal im Bildprozess berücksichtigt werden.

Bei Kraftmessvorrichtungen, welche die DMS-Technologie verwenden, wird der elastische Verformungskörper mit der Last beaufschlagt, wodurch mechanische Veränderungen bewirkt werden, welche das zukünftige Verhalten der Kraftmessvorrichtung beeinflussen. Durch die Berücksichtigung der einwirkenden Last kann das spätere Verhalten des Verformungskörpers unter Last präziser ermittelt werden.

Die erfindungsgemässe Erfassung und Berücksichtigung lastabhängiger Grössen erlaubt daher eine präzisere Kompensation störender Einflüsse.

Mit dem erfindungsgemässen Verfahren kann nicht nur das statische, sondern auch das dynamische Verhalten der Kraftmessvorrichtung im Bildbereich vorteilhaft dargestellt werden. Während innerhalb des Messprozesses unter Umständen noch keine Veränderungen feststellbar sind, können Änderungen im Bildbereich bereits ermittelt und auch prognostiziert werden. Erfolgt eine Änderung der Last wird sofort ein Kraftmesssignal gebildet, welches im Bildprozess dazu verwendet werden kann, zu erwartende Temperaturänderungen innerhalb der Kraftmessvorrichtung vorherzusagen.

Erfindungsgemäss können verschiedene physikalische Effekte, wie mechanische Kriecheffekte oder thermische Verschiebungen, in Abhängigkeit des zeitlichen Abstands von einem bestimmten Ereignis berücksichtigt werden. Z.B. werden die Zeitpunkte der Änderungen äusserer Einflüsse, wie der Umgebungstemperatur, des Luftdrucks, der Luftfeuchtigkeit oder der Last, berücksichtigt. Ferner werden vorzugsweise die Zeitpunkte der Änderungen von Einflüssen innerhalb der Kraftmessvorrichtung, wie das Einschalten oder Ausschalten der Kraftmessvorrichtung oder die Zeitpunkte von Laständerungen, berücksichtigt. Dadurch können die Auswirkungen interner Änderungen, insbesondere die Wärmeentwicklung des elektrischen Systems vorteilhaft erfasst und kompensiert werden.

In vorzugsweisen Ausgestaltungen der Kraftmessvorrichtung werden daher die Zeitpunkte der Statusänderungen sowie die zeitlichen Abstände zwischen den Statusänderungen und dem aktuellen Zeitpunkt erfasst und bei der Bildung der Referenzgrössen berücksichtigt.

In weiteren vorzugsweisen Ausgestaltungen wird das Temperaturverhalten der Kraftmessvorrichtung, insbesondere die Grösse und der zeitliche Verlauf der Wärmeströmungen, die nach Statusänderungen innerhalb der Kraftmessvorrichtung auftreten, abgebildet, so dass z.B. bei Zuschaltung einer Wärmequelle deren Auswirkungen auf verschiedene relevante Teile der Kraftmessvorrichtung präzise bestimmt werden können.

Ferner kann mittels des erfindungsgemässen Verfahrens das Verhalten einzelner Komponenten mit einfachen Massnahmen berücksichtigt werden. Insbesondere können das Einschaltverhalten und das Temperaturverhalten von aktiven und passiven elektrischen Bauteilen, wie Widerständen, Kondensatoren, Halbleitern, Verstärkerelementen, z.B. Operationsverstärker, Wandlern, und Messfühlern wahlweise berücksichtigt werden. Dabei werden die erforderlichen Daten oft durch den Hersteller der Bauteile zur Verfügung gestellt, so dass deren Verhalten mit geringem Aufwand berücksichtigt werden kann. Auf diese Weise ist es sogar möglich kostengünstigere Bauteile einzusetzen, deren Verhalten mittels des erfindungsgemässen Verfahrens idealisiert wird. Besonders vorteilhaft ist ferner, dass einzelne Komponenten individuell berücksichtigt werden können, so dass gezielte Eingriffe in das System möglich sind, um dieses lokal zu erweitern und zu optimieren.

Obwohl es grundsätzlich möglich ist, den gesamten Messprozess abzubilden, werden vorzugsweise nur die Teile des Messprozesses abgebildet, in denen der Bildprozess bessere Resultate liefert. Die Eingangsgrössen des Bildprozesses oder die innerhalb des Bildprozesses auftretenden Zwischengrössen werden aus den dazu korrespondierenden Eingangsgrössen, Zwischengrössen oder Ausgangsgrössen des Messprozesses gebildet. Weiterhin können der Messprozess und der Bildprozess gemeinsame Module aufweisen, mittels derer z.B. Kalkulationen durchgeführt werden können.

Vorzugsweise ist jedes der Bildmodule je einem Systemmodul der Kraftmessvorrichtung zugeordnet, für das wenigstens eine Eingangsgrösse und wenigstens eine Ausgangsgrösse sowie deren Zusammenhänge definiert werden.

Z.B. werden die Mechanik, die Magneteinheit, das Spulensystem, die Messfühler, wie Temperatur-Messfühler oder optische Messfühler, die Stromversorgungseinheit; die Signalverarbeitungseinheit; Messwandler, wie A/D Wandler, oder das Gehäuse der Kraftmessvorrichtung als Systemmodule definiert. Weiterhin kann die Messzelle der Kraftmessvorrichtung, die z.B. aus der Mechanik, der Magneteinheit und dem Spulensystem besteht, als Systemmodul definiert werden. Diesen Systemmodulen werden entsprechende Bildmodule zugeordnet, anhand derer der Bildprozess realisiert wird.

Ebenso wie innerhalb des Messprozesses die Systemmodule miteinander verknüpft sind, können auch mehrere Bildmodule miteinander verknüpft werden, um eine interessierende Referenzgrösse zu bilden.

Sofern von einem Hersteller verschiedene Kraftmessvorrichtungen produziert werden, die mit Systemmodulen aufgebaut sind, kann der Bildprozess durch die Wahl der entsprechenden Bildmodule ebenfalls mit minimalem Aufwand realisiert werden. Dabei können für Kraftmessvorrichtungen, die auf unterschiedlichen Technologien basieren, vorteilhaft gleiche Systemmodule und somit auch gleiche Bildmodule eingesetzt werden. Auf diese Weise kann die Planung einer neuen Kraftmessvorrichtung, einer auf der DMS-Technologie basierenden oder nach dem Prinzip der elektromagnetischen Kraftkompensation arbeitenden Kraftmessvorrichtung, jeweils auf die Konstruktion nur eines zu verbessernden Moduls konzentriert werden.

Vorzugsweise wird das erfindungsgemässe Verfahren anhand eines Computerprogramms realisiert, welches in der Systemsteuerung der Kraftmessvorrichtung implementiert wird. Das Computerprogramm weist vorzugsweise eine Basisstruktur auf, welche Daten mit den Systemmodulen des Messprozesses und den Bildmodulen des Bildprozesses austauschen kann. Dadurch kann ein hoher Grad an Flexibilität und Wiederverwendbarkeit der Bildmodule erreicht werden, in einer Bibliothek zur Verfügung gestellt werden.

Einzelheiten der erfindungsgemässen Verfahrens und der entsprechenden Kraftmessvorrichtung ergeben sich anhand der Beschreibung der in den Zeichnungen dargestellten Ausführungsbeispiele. Es zeigen:

Fig. 1    eine Waage 1 in beispielhafter Ausgestaltung, deren Messprozess MP auf dem Prinzip der elektromagnetischen Kraftkompensation basiert;

Fig. 2    ein Bildprozess BP, welcher den Messprozess MP der Waage 1 von Figur 1 abbildet; und

Fig. 3    die Systemsteuerung SM10 der Waage 1 von Figur 1, welche den Messprozess MP und den Bildprozess BP steuert.

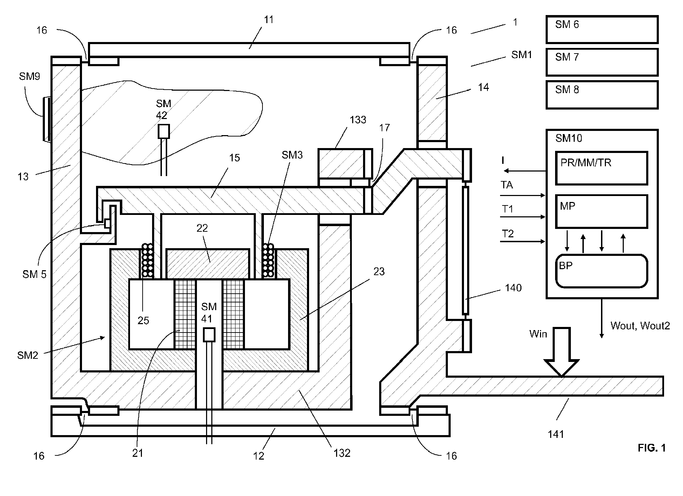

Figur 1 zeigt in stark schematisierter Darstellung eine nach dem Prinzip der elektromagnetischen Kraftkompensation arbeitende Waage 1, die in der EP 1898193A1, beschrieben ist. Die Waage weist verschiedene Systemmodule SM1, ..., SM9, nämlich ein mechanisches System SM1, ein Magnetsystem mit einem Permanentmagneten SM2, eine von einem Messstrom durchflossene Kompensationsspule SM3, zwei Temperatur-Messfühler SM41, SM42, einen optischen Sensor SM5, eine Signalverarbeitungseinheit SM6 mit Wandlereinheiten SM7, eine Stromversorgungseinheit SM8 und ein Gehäuse SM9 auf. Ferner ist eine Systemsteuerung SM10 vorgesehen, in die die Signalverarbeitungseinheit SM6 mit den Wandlereinheiten SM7 eingebunden sein kann.

Das mechanische System der Waage 1 umfasst einen mit dem Waagengehäuse SM9 fest verbundenen, feststehenden Parallelogrammschenkel 13, der mittels zweier Lenker 11 und 12 mit einem auslenkbaren Parallelogrammschenkel 14 verbunden ist, an dem ein der Aufnahme einer Last $W_{in}$ dienender Ausleger 141 angeformt ist. Die beiden Parallelogrammschenkel 13 und 14 sind durch Biegelager 16 mit den beiden Lenkern 11 und 12 verbunden. An einem Ausleger 132 des feststehenden Parallelogrammschenkels 13 ist das Magnetsystem 2 befestigt, welches einen Permanentmagneten 21 mit einer darauf aufgesetzten Polplatte 22 sowie einen topfförmigen Rückschlusskörper 23 umfasst. Von oben ragt die Kompensationsspule SM3 in den zwischen dem Rückschlusskörper 23 und der Polplatte 22 vorgesehenen Luftspalt 25 hinein. Die Kompensationsspule SM3 ist an einem Kompensationshebel 15 befestigt, welcher über ein Koppelelement 140 die Normalkomponente der einwirkenden Last $W_{in}$ zur Kompensationsspule SM3 überträgt. Der Kompensationshebel 15 ist mittels eines Biegelagers 17 an einer Säule 133 aufgehängt, welche am Ausleger 132 des feststehenden Parallelogrammschenkels 13 befestigt ist. Die Abweichungen des Kompensationshebels 15 von der Soll-Lage werden vom optischen Sensor SM5 erfasst, welcher am Parallelogrammschenkel 13 befestigt ist.

Sofern die Normalkomponente der Last $W_{in}$ präzise kompensiert ist und falls keine störenden Einwirkungen vorliegen, so korrespondiert der die Kompensationsspule SM3 durchfliessende Messstrom I exakt zur Last $W_{in}$. Durch die Einwirkung von störenden Einflüssen kann der Messstrom jedoch vom Idealwert abweichen. Dies ist z.B. dann der Fall, wenn sich durch die Erwärmung des Magnetsystems SM2 die Feldstärke geändert hat. In diesem Fall ist eine zusätzliche Stromänderung erforderlich, um die erforderliche magnetische Kraft zu erzeugen. Sofern sich aufgrund einer Erwärmung hingegen die Länge des Kompensationshebels 15 geändert hat, liegt nicht das festgelegte Übersetzungsverhältnis und somit auch eine Abweichung der zu kompensierenden Kraft F vor. Auch in diesem Fall resultiert eine Abweichung des Messstroms I vom Idealwert, da eine entsprechend geänderte magnetische Gegenkraft eingestellt werden muss.

Durch die in der Waage 1 freigesetzte Wärmeenergie treten Störgrössen normalerweise in Kombination auf. Durch den Messstrom I und den Widerstand der Kompensationsspule SM3 wird eine elektrische Leistung freigesetzt, welche zur Erwärmung der Kompensationsspule SM3, des Magnetsystems SM2 und des Kompensationshebels 15 führt. Ferner tritt eine Erwärmung des optischen Sensors SM5 auf, welche dessen Verhalten beeinflusst.

Zudem ist zu beachten, dass Wärmeeinwirkungen vom Gehäuse SM9 auftreten können, welches zum Beispiel durch einwirkende Strahlungsenergie erwärmt oder durch Luftbewegungen gekühlt wird. Weitere Wärmeeinflüsse werden von der Signalverarbeitungseinheit SM6 und der Stromversorgungseinheit SM8 und der Systemsteuerung SM10 bewirkt.

Anstatt die Temperaturen durch die Temperatur-Messfühler SM1 und SM2 zu erfassen und in einem mathematischen Modell zu verarbeiten, erfolgt die Kompensation der genannten und weiterer störender Einflüsse erfindungsgemäss anhand eines Bildprozesses BP, der in der Systemsteuerung SM10 der Waage 1 implementiert ist.

Die Systemsteuerung SM10 kontrolliert den gesamten Messprozess MP und verarbeitet vorzugsweise alle dem Messprozess MP zugeführten und entnommenen elektrischen Signale, sowie deren Verarbeitung. Die Systemmodule, mit der Mechanik SM1, dem Magnetsystem SM2, der Kompensationsspule SM3, den Temperatur-Messfühlern SM41, SM42, dem optischen Sensor SM5, und der Signalverarbeitungseinheit SM6 und den Wandlereinheiten SM7, sind daher Teil des Messprozesses MP, der in Figur 1 auf der rechten Seite symbolisch dargestellt ist. Zur Durchführung seiner Aufgaben verfügt die Systemsteuerung SM10 über wenigstens einen Prozessor PR, Speichereinheiten MM und vorzugsweise einen Zeitgeber TR.

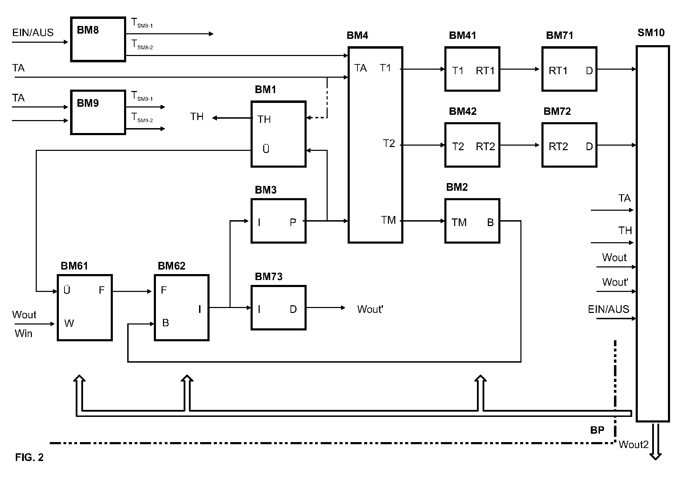

Beispielhaft ist in Figur 1 illustriert und in der Figur 2 im Detail dargestellt, dass der Systemsteuerung SM10 Prozessgrössen, wie Messsignale, nämlich die gemessene Aussentemperatur TA, die Temperatur des Magnetsystems SM2 und die Temperatur des Gehäuses SM9 zugeführt werden. Weiter werden von der Systemsteuerung SM10 elektrische Signale und der Messstrom I abgegeben.

Durch die Systemsteuerung SM10 wird ebenfalls der mittels Computerprogrammen implementierte Bildprozess BP kontrolliert, in dem der Messprozess MP zumindest teilweise abgebildet ist.

Durch das Bildmodul BM61, wird anhand von Eingangsgrössen, der Grösse der einwirkenden Last Win bzw. des aufgelegten Gewichts und der Übersetzung Ü des Kompensationshebels 15 die zu kompensierende Kraft F, die auf die Kompensationsspule einwirkt, anhand von Formel 1 als Ausgangsgrösse ermittelt:

$$F = \left( \frac{w_{in} + w_{zero}}{\ddot{u}} - w_{Spule} \right) * g \qquad \text{Formel 1}$$

Als Parameter sind in Formel 1 der Totlastwert $W_{zero}$, das Spulengewicht $w_{Spule}$ und die Erdebeschleunigung g berücksichtigt.

Die Grösse der Last Win bzw. das aufgelegte Gewicht wird dem Ausgang des Messprozesses MP entnommen. Durch die Hebelübersetzung Ü wird die Spulenkraft F entsprechend reduziert.

Durch das Bildmodul BM62 wird anhand der Grösse der vom Bildmodul BM61 ermittelten Spulenkraft F und der Grösse des Magnetfeldes B im Luftspalt 25 als Eingangsgrössen, der Strom I in der Kompensationsspule SM3 anhand von Formel 2 als Ausgangsgrösse ermittelt:

$$I = \left( \frac{F}{B(T_M) * l_{Spule}} \right) \qquad \text{Formel 2}$$

Als Parameter ist in Formel 2 die im Magnetfeld liegende Windungslänge $l_{Spule}$ der Kompensationsspule SM3 berücksichtigt.

Die magnetische Feldstärke hängt von der Temperatur TM des Magnetsystems SM2 ab. Die magnetische Feldstärke ändert sich also in Funktion der Magnettemperatur TM, die Stromleiterlänge wird in erster Näherung als konstant betrachtet. Dadurch ist der Messstrom I nur durch die Kraft F und das Magnetfeld B gegeben.

Durch das Bildmodul BM3 wird anhand der Grösse des vom Bildmodul BM62 ermittelten Messstroms F als Eingangsgrösse, die von der Kompensationsspule SM3 abgegebene elektrische Leistung P anhand von Formel 3 als Ausgangsgrösse ermittelt:

$$P = I^2 * R \qquad \text{Formel 3}$$

Als Parameter ist in Formel 3 der Widerstand R der Kompensationsspule SM3 berücksichtigt.

Durch das Bildmodul BM4 wird anhand der Grösse der vom Bildmodul BM3 ermittelten elektrische Leistung P der Kompensationsspule SM3 und der Umgebungstemperatur TA als Eingangsgrössen, die Temperatur TM des Magnetsystems SM2 als Ausgangsgrösse ermittelt. Ferner werden als Ausgangsgrössen die Temperaturen T1 und T2 der Temperatur-Messfühler SM41 und SM42 ermittelt, welche die Magnettemperatur TM und die Temperatur des Gehäuses SM9 messen.

Die Temperatur des Magnetsystems SM2 und somit die Feldstärke B wird einerseits durch die Umgebungstemperatur TA und durch die in der Kompensationsspule SM3 freigesetzte thermische Verlustleistung bestimmt.

Der Einfluss der in der Kompensationsspule SM3 abgegebenen Leistung P auf die Magnettemperatur TM wird in einer ersten Transferfunktion eingeführt:

$$P \rightarrow \left( \frac{KTM}{tauPTM.s+1} \right) \rightarrow T_M \qquad \text{Transferfunktion 1}$$

Als Parameter sind in der ersten Transferfunktion das Verhältnis KTM der Magnettemperatur TM zur Spulenleistung P und die thermische Zeitkonstante "Spulenleistung P → Magnettemperatur TM" berücksichtigt.

Dadurch ist der Einfluss der Spulenleistung P auf die mittlere Magnettemperatur TM physikalisch abgebildet.

Mittels dieser und weiterer Transferfunktionen können auch komplexere Zusammenhänge, z.B. eine Wärmeleitungsgleichung, berücksichtigt werden. Die beispielsweise angegebenen Transferfunktionen beschreiben nur einfache Fälle. Grundsätzlich können jedoch alle relevanten Faktoren mit beliebiger Genauigkeit berücksichtigt werden.

Der Einfluss der Umgebungstemperatur TA auf die Magnettemperatur TM wird durch eine zweite Transferfunktion eingeführt:

$$TA \rightarrow \left( \frac{1}{tauTAM.s+1} \right) \rightarrow T_M \qquad \text{Transferfunktion 2}$$

Als Parameter ist in der zweiten Transferfunktion die thermische Zeitkonstante "Aussentemperatur TA → Magnettemperatur TM" berücksichtigt.

Damit ist der Einfluss der Umgebungstemperatur auf die Magnettemperatur TM abgebildet.

Die anhand der ersten und zweiten Transferfunktionen ermittelten Einflüsse auf die Magnettemperatur TM werden entsprechend summiert. Die Temperatureinflüsse auf die Temperatur-Messfühler SM41 und SM42, welche auf die Temperaturen T1 und T2 erwärmt werden, werden analog ermittelt. In den nachgeschalteten Bildmodulen BM41 und BM42 werden die gemessenen Temperaturen RT1 und RT2 entsprechend korrigiert.

Durch das Bildmodul BM2 wird anhand der Grösse der vom Bildmodul BM4 ermittelten Temperatur TM des Magnetsystems SM2 als Eingangsgrösse, die Magnetfeldstärke B anhand von Formel 4 als Ausgangsgrösse ermittelt:

$$B = \left( 1 + T_M * TC \right) B_0 \qquad \text{Formel 4}$$

Als Parameter sind in Formel 4 der Temperaturkoeffizient TC des Magnetsystems SM2 und die Magnetfeldstärke $B_0$ bei 0°C berücksichtigt. Typischerweise wird eine linearisierte B(T) Kennlinie verwendet.

Die Grösse der ermittelten Magnetfeldstärke B wird vom Ausgang des Bildmoduls BM2 zum Eingang des bereits diskutierten Bildmoduls BM62 geführt.

Durch das Bildmodul BM1 werden anhand der Grösse der vom Bildmodul BM3 ermittelten elektrischen Leistung P der Kompensationsspule SM3 als Eingangsgrösse, die Temperatur TH des Kompensationshebels 15 und das Übersetzungsverhältnis Ü als Ausgangsgrössen ermittelt.

Mittels einer dritten Transferfunktion wird die Temperatur TH des Kompensationshebels 15 ermittelt.

$$P \rightarrow \left( \frac{KTH}{tauPTH.s + 1} \right) \rightarrow TH \qquad \text{Transferfunktion 3}$$

Als Parameter sind in der dritten Transferfunktion das Verhältnis KTH der Hebeltemperatur TH zur Spulenleistung P und die thermische Zeitkonstante "Spulenleistung P → Hebeltemperatur TM" berücksichtigt.

In der Folge werden die Werte der ermittelten Hebeltemperatur TH, des Temperaturkoeffizienten TCH des Übersetzungsverhältnisses sowie des bei 0°C vorliegenden Übersetzungsverhältnisses $U_0$ multipliziert, um die Veränderung des Übersetzungsverhältnisses $\delta\ddot{U}$ zu bestimmen (siehe Formel 5).

$$\delta\ddot{U} = \left( TH * TCH * \ddot{U}_0 \right) \qquad \text{Formel 5}$$

Die Summe der Werte des Übersetzungsverhältnis U0 bei 0°C und der ermittelten Veränderung $\delta\ddot{U}$ ergibt das momentan vorliegende Übersetzungsverhältnis Ü (siehe Formel 6).

$$\ddot{U} = \ddot{U}_0 + \delta\ddot{U} \qquad \text{Formel 6}$$

Die Grösse des ermittelten Übersetzungsverhältnisses Ü wird vom Ausgang des Bildmoduls BM1 zum Eingang des bereits diskutierten Bildmoduls BM61 geführt.

In den Bildmodulen BM71, BM72, BM73 werden Einflüsse auf die Wandlereinheiten SM7 evaluiert und berücksichtigt. Von diesen Bildmodulen werden digitale Werte zur Systemsteuerung SM10 übertragen.

Durch den beschriebenen Bildprozess BP werden daher zahlreiche physikalische Grössen zur Verfügung gestellt, die in den Messprozess MP übernommen werden können. Vom Messprozess MP können ferner physikalische Grössen in den Bildprozess BP überführt werden, um dort weitere physikalische Grössen zu bestimmen. Z.B. kann das Gewicht Win der Last oder der Messstrom I aus dem Messprozess MP in den Bildprozess BP überführt werden, um dort die Temperatur TM des Magnetsystems SM2, die aktuelle Feldstärke B und das Übersetzungsverhältnis Ü zu bestimmen.

Im Bildprozess BP können daher nur die Bildmodule BM1, BM2, BM3 und BM4 implementiert sein. Das Kraftmesssignal Wout wird in diesem Fall durch den Messprozess MP erzeugt. Es ist jedoch auch möglich, dass das Kraftmesssignal Wout vom Bildprozess BP an eine Anzeigeeinheit abgegeben wird. Ferner kann das Kraftmesssignal Wout vom Bildprozess BP an die Signalverarbeitungsstufe abgegeben werden, welche innerhalb des Bildprozesses BP oder des Messprozesses BP realisiert ist. Sofern das Kraftmesssignal rechnerisch gefiltert wird, so kann dies im Bildprozess BP durchgeführt werden. Sofern hingegen elektrische Bauteile zur Filterung verwendet werden, so sind diese in einem Systemmodul SM7 integriert.

Falls nun festgestellt wird, dass eine der ermittelten Grössen nicht genügend genau ermittelt wurde, weil bestimmte Störgrössen vernachlässigt wurden, so können diese mit minimalem Aufwand zusätzlich berücksichtigt werden.

Oben wurde erwähnt, dass im Bildmodul BM1 nur die Grösse der vom Bildmodul BM3 ermittelten elektrischen Leistung P der Kompensationsspule SM3 als Eingangsgrösse berücksichtigt wurde. Wird nun festgestellt, dass das Übersetzungsverhältnis Ü nicht genügend genau bestimmt wurde, so wird geprüft, welche weiteren Einflussfaktoren störend in Erscheinung treten. Falls festgestellt wird, dass die Umgebungstemperatur TA störend in Erscheinung tritt, so kann das Bildmodul BM1 mit geringem Aufwand angepasst werden, indem eine weitere Transferfunktion eingeführt wird, mittels derer Änderungen der Umgebungstemperatur TA berücksichtigt werden. Die Umgebungstemperatur TA kann beispielsweise dominant werden, falls über längere Zeit nur kleine Messströme I geschlossen sind.

Die erfindungsgemässe Kraftmessvorrichtung bzw. das implementierte Computerprogramm kann daher gezielt bearbeitet und erweitert werden, um lokale Mängel zu beheben. Falls in einer Folgegeneration der Kraftmessvorrichtung ein neues Magnetsystem SM2 mit anderen Temperaturkoeffizienten eingesetzt wird, so wird typischerweise nur das entsprechende Bildmodul BM2 überarbeitet.

Der Bildprozess BP kann daher schrittweise optimiert oder mit einfachen Massnahmen an weitere Kraftmessvorrichtungen adaptiert werden. Sofern verschiedene bekannte Systemmodule SM zu einer neuen Vorrichtung zusammengesetzt werden, so können die entsprechenden Bildmodule BM ebenfalls identisch übernommen und in einem Bildprozess BP zusammengefügt werden.

In Figur 2 ist ferner illustriert, dass die Systemsteuerung SM10 ebenfalls Einschaltvorgänge registriert und deren Auswirkungen auf den Messprozess berücksichtigt. Durch entsprechende Transferfunktionen können die Einflüsse des Einschaltvorgangs, insbesondere die Erwärmung der Stromversorgungseinheit SM8 in einem Bildmodul BP8 berücksichtigt werden. Wie dies in Figur 2 gezeigt ist, können im Bildmodul BP8 nicht nur die erzeugte Verlustwärme, sondern auch deren Verteilungswege berücksichtigt werden. Ebenso kann für das Gehäuse SM9 ein Bildmodul BM9 vorgesehen werden, in dem die Umgebungstemperatur TA und die Einstrahlung als Eingangsgrössen verwendet werden und durch das festgestellt wird, an welchen Stellen innerhalb der Kraftmessvorrichtung 1 zu berücksichtigende Temperatureinflüsse auftreten. Es ist daher mit relativ einfachen Massnahmen möglich, das Gehäuse SM9 isoliert zu untersuchen und dessen Temperatureinflüsse auf den Messprozess MP zu berücksichtigen und zu kompensieren, was mit den eingangs beschriebenen mathematischen Verfahren nicht möglich ist.

Mit dem erfindungsgemässen Verfahren können Einflüsse der Umgebung auf den Messprozess MP daher strukturiert erfasst und mit relativ geringem Aufwand mit der gewünschten Genauigkeit kompensiert werden. Eine Verbesserung des Korrektursystems führt daher nicht zu einem überproportionalen Aufwand.

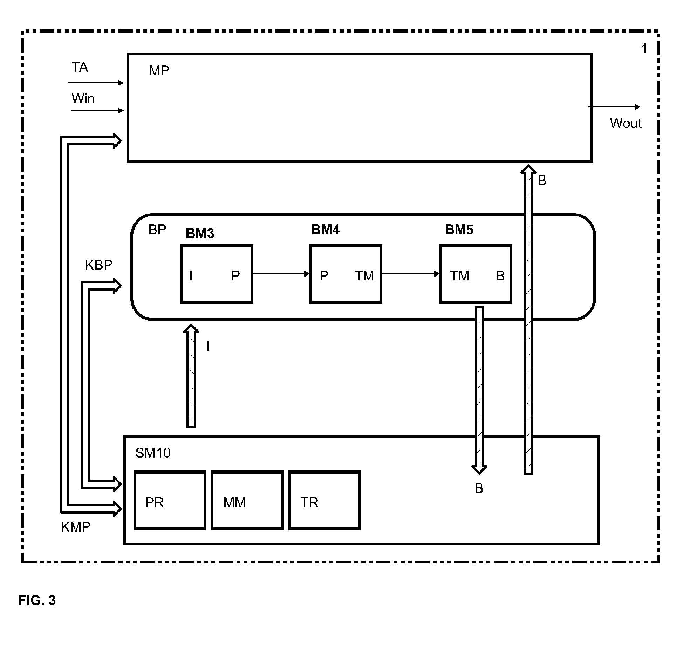

Figur 3 zeigt die Systemsteuerung SM10 der Waage 1 von Figur 1, welche den Messprozess MP und einen vereinfachten Bildprozess BP, in dem die Bildmodule BM3, BM4 und BM5 implementiert sind, über je einen Kommunikationskanal KMP, KBP steuert. Die Steuerung unterschiedlicher Prozesse durch einen Prozessor ist dem Fachmann aus der Informatik bekannt. Da Statusänderungen in relativ langen zeitlichen Abständen auftreten, genügt die Rechenleistung von Prozessoren PR, wie sie bereits in Wagen eingesetzt werden, für die Erledigung dieser zusätzlichen Aufgaben. Gegebenenfalls ist die Kapazität der eingesetzten Speichermodule MM zu erweitern. Zur Realisierung des erfindungsgemässen Verfahrens ist daher nur ein geringer Mehraufwand erforderlich.

In Figur 3 ist gezeigt, dass im Messprozess MP die Grösse des Messstromes I erfasst und dem Bildmodul BM3 zugeführt wird. Anhand der verketteten Bildmodule BM3, BM4 und BM5 wird in der Folge, wie oben beschrieben, die Feldstärke B des Magnetsystems SM2 ermittelt und zurück zum Messprozess MP übertragen. Die erfindungsgemässe Lösung kann daher flexibel eingesetzt und den jeweiligen Bedürfnissen angepasst werden.

Das erfindungsgemässe Verfahren zur Temperaturkorrektur und die erfindungsgemässe Kraftmessvorrichtung 1 wurden in bevorzugten Ausgestaltungen beschrieben und dargestellt. Die Kraftmessvorrichtung 1 wurde in der Ausgestaltung einer Waage 1 beschrieben. Die Erfindung ist jedoch auch bei anderen Kraftmessvorrichtungen, wie gravimetrischen Messgeräten, Wägemodulen, Lastzellen und Messsensoren, die gegebenenfalls Teil einer Waage bilden können, einsetzbar. Ferner die Lösung natürlich auch nicht auf eine bestimmte Wahl, Konfiguration, Gruppierung und Anwendung der Komponenten der Kraftmessvorrichtung 1 beschränkt.

**Patentansprüche**

1. Verfahren zur Ermittlung von Prozessgrössen in einer Kraftmessvorrichtung (1), insbesondere einer Waage, mit einer Systemsteuerung (SM10), welche anhand eines Messprozesses (MP) ein zu einer einwirkenden Kraft (Win) korrespondierendes elektrisches Kraftmesssignal (Wout) bildet; wobei in den Messprozess (MP) eingegriffen wird, um störende Einflüsse zu kompensieren, **dadurch gekennzeichnet, dass** der Messprozess (MP) durch einen Bildprozess (BP) zumindest teilweise abgebildet wird, der wenigstens ein Bildmodul (BM1, BM2, ..., BMn) aufweist, durch das ein physikalischer Teilprozess des Messprozesses (MP) abgebildet und der Zusammenhang zwischen wenigstens einer physikalischen Eingangsgrösse und wenigstens einer physikalischen Ausgangsgrösse erstellt wird, und dass dem Bildprozess (BP) wenigstens eine Prozessgrösse, wie eine Eingangsgrösse, eine Zwischengrösse und/oder eine Ausgangsgrösse, des Messprozesses zugeführt wird, zu der wenigstens eines der Bildmodul (BM1, BM2, ..., BMn) eine dazu korrespondierende physikalische Referenzgrösse (P, TM, TH, T1, T2) bildet, welche als Prozessgrösse in den Messprozess eingeführt oder mittels der eine Prozessgrösse (TM, Wout) des Messprozesses korrigiert wird.

2. Verfahren nach Anspruch 1, **dadurch gekennzeichnet, dass** wenigstens eine lastabhängige und/oder lastunabhängige Prozessgrösse aus dem Messprozess (MP) in den Bildprozess (BP) transferiert und dort durch das entsprechende Bildmodul (BM1, BM2, ..., BMn) zur Bildung der Referenzgrösse verwendet wird, die relevant für das zu bestimmende Kraftmesssignal ist.

3. Verfahren nach Anspruch 1 oder 2, **dadurch gekennzeichnet, dass** in dem wenigstens einen Bildmodul (BM1, BM2, ..., BMn) die physikalischen Zusammenhänge zwischen der wenigstens einen Eingangsgrösse und der wenigstens einen Ausgangsgrösse festgelegt sind, so dass durch Erfassung einer Eingangsgrösse oder einer Ausgangsgrösse, die damit zusammenhängende Referenzgrösse bestimmbar ist.

4. Verfahren nach Anspruch 3, **dadurch gekennzeichnet, dass** die Zusammenhänge zwischen der wenigstens einen Eingangsgrösse und der wenigstens einen Ausgangsgrösse in dem wenigstens einen Bildmodul (BM1, BM2, ..., BMn) anhand gespeicherter physikalischer Kennlinien festgelegt ist.

5.  Verfahren nach Anspruch 3 oder 4, **dadurch gekennzeichnet, dass** die Zusammenhänge zwischen der wenigstens einen Eingangsgrösse und der wenigstens einen Ausgangsgrösse in dem wenigstens einen Bildmodul (BM1, BM2, ..., BMn) anhand physikalischer Grössen, wie Temperaturkoeffizienten, sowie der entsprechenden physikalischen Gesetzmässigkeiten festgelegt ist.

6.  Verfahren nach einem der Ansprüche 1 bis 5, **dadurch gekennzeichnet, dass** eine Eingangsgrösse oder eine Zwischengrösse des Bildprozesses (BP) durch eine dazu korrespondierende Eingangsgrösse, Zwischengrösse oder Ausgangsgrösse des Messprozesses (MP) gebildet wird.

7.  Verfahren nach Anspruch 6, **dadurch gekennzeichnet, dass** der dem Bildprozess (BP) zugeführten wenigstens einen Eingangsgrösse oder Zwischengrösse eine dazu korrespondierende physikalische Referenzgrösse zugeordnet wird, welche im Messprozess messtechnisch nicht erfasst wird.

8.  Verfahren nach einem der Ansprüche 1-7, **dadurch gekennzeichnet, dass** das Ausgangssignal (Wout) des Messprozesses (MP), welches zur einwirkenden Last (Win) korrespondiert als Eingangsgrösse für den Bildprozess (BP) verwendet wird, in dem die dazu korrespondierende elektrische Leistung, welche in der Kraftmessvorrichtung (1) freigesetzt wird, sowie dazu korrespondierende Temperaturänderungen ermittelt werden.

9.  Verfahren nach einem der Ansprüche 1-8, **dadurch gekennzeichnet, dass** Statusänderungen, insbesondere das Ein- und Ausschalten, der Kraftmessvorrichtung (1) sowie Laständerungen, erfasst werden und der zeitliche Verlauf bei der Bestimmung der Referenzgrösse berücksichtigt wird, die gegebenenfalls von thermischen Effekten oder mechanischen Kriecheffekten abhängt.

10. Verfahren nach Anspruch 9, **dadurch gekennzeichnet, dass** das Temperaturverhalten der Kraftmessvorrichtung (1), insbesondere die Grösse und der zeitliche Verlauf von Wärmeströmungen, die nach Statusänderungen innerhalb der Kraftmessvorrichtung (1) auftreten, und/oder das Verhalten von Einzelkomponenten, wie aktiver oder passiver elektrischer Bauteile, insbesondere das Einschaltverhalten und das Temperaturverhalten, abgebildet und bei der Bestimmung der Referenzgrösse berücksichtigt werden.

11. Kraftmessvorrichtung (1), insbesondere eine Waage, mit einer Systemsteuerung (SM10), welche anhand eines Messprozesses (MP) ein zu einer einwirkenden Kraft (Win) korrespondierendes elektrisches Kraftmesssignal (Wout) bildet, wobei Mittel vorgesehen sind, die dem Eingriff in den Messprozess (MP) und der Kompensation störender Einflüsse dienen, **dadurch gekennzeichnet, dass** die Systemsteuerung (SM10) der Verwaltung des Messprozesses (MP) und der Verwaltung eines Bildprozesses (BP) dient, welcher den Messprozesses (MP) zumindest teilweise abbildet und der wenigstens ein Bildmodul (BM1, BM2, ..., BMn) umfasst, mittels dessen ein physikalischer Teilprozess des Messprozesses (MP) abbildbar und der entsprechende Zusammenhang zwischen wenigstens einer physikalischen Eingangsgrösse und wenigstens einer physikalischen Ausgangsgrösse erstellbar ist, und dass dem Bildprozess (BP) wenigstens eine Prozessgrösse, wie eine Eingangsgrösse, eine Zwischengrösse und/oder eine Ausgangsgrösse, des Messprozesses zuführbar ist, zu der anhand wenigstens eines der Bildmodule (BM1, BM2, ..., BMn) eine dazu korrespondierende physikalische Referenzgrösse (P, TM, TH, T1, T2) bildbar ist, welche als Prozessgrösse in den Messprozess (MP) einführbar oder mittels der eine Prozessgrösse (TM, Wout) des Messprozesses (MP) korrigierbar ist.

12. Kraftmessvorrichtung (1) nach Anspruch 11, **dadurch gekennzeichnet, dass** jedes der Bildmodule (BM1, BM2, ..., BMn) je einem Systemmodul (SM1, SM2, ..., SMn) der Kraftmessvorrichtung (1) zugeordnet ist, dessen wenigstens eine Eingangsgrösse und wenigstens eine Ausgangsgrösse sowie deren physikalische Zusammenhänge definiert sind.

13. Kraftmessvorrichtung (1) nach Anspruch 11 oder 12, **dadurch gekennzeichnet, dass** die Systemmodule (SM1, SM2, ..., SMn) der Kraftmessvorrichtung (1)

     - die Mechanik (SM1); und/oder
     - die Magneteinheit (SM2); und/oder
     - das Spulensystem (SM3); und/oder
     - Messfühler, wie Temperatur-Messfühler (SM4) und/oder optische Messfühler (SM5); und/oder

- die Stromversorgungseinheit; und/oder
- die Signalverarbeitungseinheit (SM7); und/oder
- Messwandler (SM8), wie A/D Wandler; und/oder
- das Gehäuse (SM9)
- die Messzelle (SM1, SM2, SM3)

sind.

**14.** Kraftmessvorrichtung (1) nach Anspruch 11 oder 12, **dadurch gekennzeichnet, dass** die Kraftmessvorrichtung (1) auf der DMS-Technologie basiert oder nach dem Prinzip der elektromagnetischen Kraftkompensation arbeitet.

FIG. 1

FIG. 2

FIG. 3

Europäisches Patentamt
European Patent Office
Office européen des brevets

**EUROPÄISCHER RECHERCHENBERICHT**

Nummer der Anmeldung

EP 09 16 6243

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 4 804 052 A (GRIFFEN NEIL C [US]) 14. Februar 1989 (1989-02-14) * Spalte 2, Zeile 13 - Zeile 31; Abbildung 8b * * Spalte 8, Zeile 11 - Zeile 15 * ----- | 1-14 | INV. G01G23/01 G01G23/48 |
| X | US 5 166 892 A (INOUE SHIN-ICHI [JP] ET AL) 24. November 1992 (1992-11-24) * Spalte 1, Zeile 10 - Zeile 16; Abbildungen 2-5,12,13 * * Spalte 2, Zeile 3 - Zeile 14 * * Spalte 7, Zeile 63 - Spalte 8, Zeile 65 * ----- | 1-14 | |

| RECHERCHIERTE SACHGEBIETE (IPC) |
|---|
| G01G |

Der vorliegende Recherchenbericht wurde für alle Patentansprüche erstellt

| Recherchenort | Abschlußdatum der Recherche | Prüfer |
|---|---|---|
| Den Haag | 8. Februar 2010 | Pugno, Roberto |

**ANHANG ZUM EUROPÄISCHEN RECHERCHENBERICHT**
**ÜBER DIE EUROPÄISCHE PATENTANMELDUNG NR.**

EP 09 16 6243

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

08-02-2010

| Im Recherchenbericht angeführtes Patentdokument | Datum der Veröffentlichung | Mitglied(er) der Patentfamilie | Datum der Veröffentlichung |
|---|---|---|---|
| US 4804052 A | 14-02-1989 | AU 599883 B2 | 26-07-1990 |
| | | AU 2512988 A | 01-06-1989 |
| | | BR 8806295 A | 13-02-1990 |
| | | CA 1303073 C | 09-06-1992 |
| | | CN 1033691 A | 05-07-1989 |
| | | DE 3879894 D1 | 06-05-1993 |
| | | DE 3879894 T2 | 28-10-1993 |
| | | EP 0319202 A2 | 07-06-1989 |
| | | JP 1229916 A | 13-09-1989 |
| | | JP 2067909 C | 10-07-1996 |
| | | JP 7081904 B | 06-09-1995 |
| | | MX 164997 B | 13-10-1992 |
| US 5166892 A | 24-11-1992 | KEINE | |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- GB 1495278 A
- DE 29707659 U1
- DE 29803425 U1
- EP 1898193 A1

**In der Beschreibung aufgeführte Nicht-Patentliteratur**

- Bauen Sie Ihre Qualität auf solidem Grund!. Firmenbroschüre. Mettler Toldeo GmbH, Januar 2001, 14-15